# EUROPÄISCHE PATENTSCHRIFT

(11) **EP 4 073 558 B1**
(45) Veröffentlichungstag und Bekanntmachung des Hinweises auf die Patenterteilung: **29.01.2025**
(21) Anmeldenummer: 20820891.8
(22) Anmeldetag: 07.12.2020
(51) Int. Cl.: G21K 1/06, G02B 1/12, G02B 5/18

(54) **VERFAHREN ZUR HERSTELLUNG EINES DIFFRAKTIVEN OPTISCHEN ELEMENTS UND DIFFRAKTIVES OPTISCHES ELEMENT**
METHOD FOR PRODUCING A DIFFRACTIVE OPTICAL ELEMENT AND DIFFRACTIVE OPTICAL ELEMENT
PROCÉDÉ DE FABRICATION D'UN ÉLÉMENT OPTIQUE DIFFRACTIF ET ÉLÉMENT OPTIQUE DIFFRACTIF

(30) Priorität: 13.12.2019 DE 102019134336
(43) Veröffentlichungstag der Anmeldung: 19.10.2022
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: KLEY, Ernst-Bernhard, 07745 Jena (DE); SCHREMPEL, Frank, 07745 Jena (DE); ZEITNER, Uwe Detlef, 07745 Jena (DE)
(74) Vertreter: Epping - Hermann - Fischer
(86) Internationale Anmeldenummer: PCT/EP2020/084881
(87) Internationale Veröffentlichungsnummer: WO 2021/116017

(56) Entgegenhaltungen:
- US-A1- 2005 161 619
- US-A1- 2008 149 858
- US-A1- 2018 095 201
- ESCOUBAS L ET AL: "ENHANCED DIFFRACTION EFFICIENCY OF GRATINGS IN MULTILAYERS", OPTICS LETTERS, OPTICAL SOCIETY OF AMERICA, US, vol. 25, no. 4, 15 February 2000 (2000-02-15), pages 194 - 196, XP000947114, ISSN: 0146-9592

## Beschreibung

Die Anmeldung betrifft ein Verfahren zur Herstellung eines diffraktiven optischen Elements und das mit dem Verfahren herstellbare diffraktive optische Element.

Diffraktive optische Elemente wie insbesondere Reflexionsbeugungsgitter, welche die Strahlung je nach Wellenlänge in verschiedene Winkelbereiche beugen, sind beispielsweise in Monochromatoren oder Spektrometern enthalten. Zur Erzielung hoher spektraler Auflösung und Effizienz sind an die zu realisierenden Strukturen hohe Anforderungen gestellt.

Insbesondere bei diffraktiven optischen Elementen für elektromagnetische Strahlung mit kurzen Wellenlängen, beispielsweise im EUV- (Extrem-Ultraviolett) oder Röntgenbereich, sind diffraktive Strukturen aufgrund der hohen Anforderungen an die Genauigkeit schwer herzustellen. Für den Fall, dass die Netzebenen von Einkristallen als Bragg-Reflektor dienen, ergibt sich darüber hinaus ein weiteres Problem. Durch die Struktur des Einkristalls und die Einfallsrichtung des Strahles sind die Gitterebenen und damit die Phase der Bragg-Reflexion vorgegeben. Durch Materialabtragung von Gitterebenen kann die Phase der Reflexion nur in 2π-Schritten verändert werden, was für die Interferenz und Beugung wirkungslos ist.

Die Druckschrift US 2018/0095201 A1 befasst sich mit einem Verfahren zur Herstellung nicht-einheitlicher Gitter durch Implantation verschiedener Dichten von Ionen.

Die Druckschrift US 2008/0149858 A1 beschreibt ein Verfahren zur Prozessierung einer Oberfläche durch einen Ionen-Strahl.

Der Artikel "ENHANCED DIFFRACTION EFFICIENCY OF GRATINGS IN MULTILAYERS" von L. Escoubas et al. in Optics Letters, Bd. 25, Nr. 4, Seiten 194-196 (2000) befasst sich mit einer erhöhten Effizienz für Gitter in Mehrschichtsystemen durch Ionen-Implantation.

Die Druckschrift US 2005/0161619 A1 ist auf ein Verfahren zur Korrektur von Fehlern beim Kristall-Schnitt in der Halbleiterprozessierung gerichtet.

Eine zu lösende Aufgabe besteht darin, ein Verfahren zur Herstellung eines diffraktiven optisches Elements anzugeben, mit dem geringe Strukturhöhen, die sich insbesondere zur Realisierung von Phasenverschiebungen von weniger als 2π eignen, herstellbar sind. Weiterhin soll ein solches diffraktives optisches Element angegeben werden.

Diese Aufgaben werden durch ein Verfahren zur Herstellung eines diffraktiven optischen Elements und ein diffraktives optisches Element gemäß den unabhängigen Patentansprüchen 1 und 9 gelöst. Vorteilhafte Ausgestaltungen und Weiterbildungen der Erfindung sind Gegenstand der abhängigen Ansprüche.

Gemäß Anspruch 1 der vorliegenden Erfindung des Verfahrens zur Herstellung eines diffraktiven optischen Elements wird eine Oberflächenstruktur durch Implantation von Ionen in die Oberfläche eines geeigneten Materials erzeugt. Die Oberfläche des Materials, die nach der Erzeugung der Oberflächenstruktur durch Ionenimplantation eine Oberfläche des diffraktiven optischen Elements ausbildet, kann die Oberfläche eines Substrats, einer auf das Substrat aufgebrachten Schicht oder eines auf das Substrat aufgebrachten Schichtsystems sein.

Gemäß Anspruch 1 der vorliegenden Erfindung weist die Oberflächenstruktur eine Strukturhöhe von nicht mehr als 10 nm, insbesondere von nicht mehr als 5 nm oder sogar nicht mehr als 1 nm auf. Bevorzugt weist die Oberflächenstruktur eine Strukturhöhe von 0,1 nm bis 10 nm, insbesondere von 0,5 nm bis 10 nm, auf.

Das hierin beschriebene Verfahren zur Herstellung eines diffraktiven optischen Elements macht insbesondere von der Idee Gebrauch, dass durch die Implantation von Ionen Defekte in dem Ionenimplantationsbereich entstehen, beispielsweise Leerstellen, Zwischengitteratome, Substitutionsatome, Versetzungen, Stapelfehler oder amorphisierte Bereiche. Durch die Defekte können sich die Bindungslängen ändern und/oder Bereiche mit veränderter Dichte entstehen. Hierdurch entsteht in dem Ionenimplantationsbereich eine Volumenänderung, die zu einer Anhebung der Oberfläche und somit zur Entstehung der Oberflächenstruktur führt. Die Herstellung der Oberflächenstruktur erfolgt insbesondere ohne die Anwendung materialabtragender Verfahren wie beispielsweise Ätzverfahren. Mit dem Verfahren können vorteilhaft geringe Strukturhöhen von weniger als 10 nm oder sogar von weniger als 1 nm erzeugt werden, die mit herkömmlichen Ätzverfahren nicht ohne weiteres mit der für diffraktive optische Elemente erforderlichen Genauigkeit herstellbar wären.

Gemäß Anspruch 1 der vorliegenden Erfindung wird die Oberflächenstruktur mit einer in lateraler Richtung variierenden Strukturhöhe erzeugt. Unter der lateralen Richtung ist hier und im Folgenden eine parallel zur Oberfläche des diffraktiven optischen Elements verlaufende Richtung zu verstehen. Die Anhebung der Oberfläche und die daraus resultierende Strukturhöhe kann durch eine ortsabhängige Ionenimplantation gezielt eingestellt werden. Die Strukturhöhe kann stufenweise oder kontinuierlich variiert werden. Die Oberflächenstruktur kann insbesondere eine periodische Struktur sein. Die Periode beträgt vorzugsweise von 50 nm bis 500 nm. Es ist auch möglich, dass die Periode in lateraler Richtung variiert. In diesem Fall ist die Oberflächenstruktur beispielsweise ein gechirptes Gitter.

Gemäß zumindest einer Ausführungsform erfolgt die Ionenimplantation durch eine strukturierte Maskenschicht. Die Ortsauflösung der Oberflächenstruktur in lateraler Richtung wird in diesem Fall durch die strukturierte Maskenschicht vorgegeben. Die strukturierte Maskenschicht kann eine sogenannte binäre Maskenschicht sein, die Öffnungen zwischen für die verwendeten Ionen undurchdringlichen Bereichen aufweist. Die Ionen werden diesem Fall im Wesentlichen nur in den Bereichen der Öffnungen in der strukturierten Maskenschicht in die Oberfläche des Materials implantiert. Auf diese Weise kann beispielsweise eine Oberflächenstruktur mit einem Stufenprofil erzeugt werden. Alternativ kann die Maskenschicht ein Höhenprofil aufweisen, dass eine Ionenimplantation mit in lateraler Richtung variierender Energie und Konzentration ermöglicht. Auf diese Weise kann insbesondere eine kontinuierliche Variation der Strukturhöhe erzielt werden. Die Maskenschicht ist vorzugsweise eine Metallschicht, beispielsweise eine Chromschicht oder Goldschicht. Die Maskenschicht kann aber auch andere Materialien wie beispielsweise Metalloxide, Polymere oder Resists aufweisen.

Gemäß einer weiteren Ausführungsform erfolgt die Ionenimplantation mittels eines in lateraler Richtung begrenzten Ionenstrahls, wobei die Ionenfluenz des Ionenstrahls bei der Ionenimplantation variiert wird. Die Variation der Ionenfluenz bewirkt in diesem Fall die in lateraler Richtung variierende Strukturhöhe. Auf diese Weise kann eine stufenweise oder kontinuierlich variierende Strukturhöhe erzeugt werden. Eine lokale Variation der Ionenfluenz ermöglicht es vorteilhaft, komplexe Oberflächenstrukturen zu erzeugen. Bei dieser Ausgestaltung des Verfahrens wird die Oberflächenstruktur durch den Ionenstrahl sequenziell erzeugt.

Gemäß zumindest einer Ausführungsform werden die Ionen in eine Implantationstiefe zwischen 10 nm und 500 nm implantiert. Unter der Ionenimplantationstiefe ist hier die Tiefe zu verstehen, in der die Ionenkonzentration ihr Maximum aufweist. Die Implantationstiefe kann insbesondere durch die Ionenenergien der implantierten Ionen, aber auch durch die Ionenmasse und die Dichte des Materials, gezielt eingestellt werden.

Gemäß zumindest einer Ausführungsform beträgt die Ionenenergie bei der Ionenimplantation zwischen 2 keV und 100 keV. Die implantierten Ionen können beispielsweise Edelgasionen wie Argonionen oder Heliumionen, welche die weiteren physikalischen Eigenschaften des Materials nicht beeinflussen, oder Substitutionsatome des Materials des Substrates, der Schicht oder des Schichtsystems sein.

Gemäß zumindest einer Ausführungsform ist die Strukturhöhe h der Oberflächenstruktur ein nicht ganzzahliges Vielfaches des Gitterebenenabstands a des Materials oder, wenn das diffraktive optische Element ein Schichtsystem aufweist, ein nicht ganzzahliges Vielfaches der Dicke einer einzelnen Schicht des Schichtsystems des diffraktiven optischen Elements. Unter dem Gitterebenenabstand a ist hier der Gitterebenenabstand in vertikaler Richtung, d.h. senkrecht zum Substrat oder der Schicht, zu verstehen. Wenn die Strukturhöhe h der Oberflächenstruktur ein nicht ganzzahliges Vielfaches des Gitterebenenabstands a oder, wenn das diffraktive optische Element ein Schichtsystem aufweist, ein nicht ganzzahliges Vielfaches der Dicke einer einzelnen Schicht des Schichtsystems ist, können bei der Verwendung der Oberflächenstruktur als diffraktives optisches Element vorteilhaft Phasenverschiebungen erzeugt werden, die ungleich 2π sind.

Gemäß zumindest einer Ausführungsform ist die Strukturhöhe h der Oberflächenstruktur geringer als ein Gitterebenenabstand a des Materials oder, wenn das diffraktive optische Element ein Schichtsystem aufweist, geringer als die Dicke einer einzelnen Schicht des Schichtsystems des diffraktiven optischen Elements. Mit dem hierin beschriebenen Verfahren der Ionenimplantation können vorteilhaft Strukturhöhen h der Oberflächenstruktur erzeugt werden, die kleiner als der Gitterebenenabstand a oder, wenn das diffraktive optische Element ein Schichtsystem aufweist, geringer als die Dicke einer einzelnen Schicht des Schichtsystems sind. Solche geringen Strukturhöhen könnten mit herkömmlichen materialabtragen Verfahren nicht ohne weiteres erzeugt werden, da mit solchen Verfahren ganze Atomlagen abgetragen werden. Im Gegensatz dazu können durch die hierin beschriebene Ionenimplantation Defekte erzeugt werden, die beispielsweise durch eine Änderung der Bindungslängen und oder der Dichte des Materials zu Anhebungen der Oberfläche um eine Strukturhöhe h führen, die kleiner sind als der Gitterebenenabstand a. Bevorzugte Werte für die Strukturhöhe sind beispielsweise h = a / 2n, wobei n eine ganze Zahl ist, d.h. h = a/2, h = a/4, h = a/6 usw. Eine Strukturhöhe von h = a/2 ist beispielsweise dazu geeignet, eine Phasendifferenz von π zu erzeugen. Je nach Energie bzw. Wellenlänge können insbesondere bei einem diffraktiven optischen Element für EUV- oder Röntgenstrahlung höhere Bragg-Ordnungen genutzt werden. Diese höheren Ordnungen der Bragg-Reflexion treten auf, wenn die die Strukturhöhe vorteilhaft a/4, a/6 usw. beträgt.

Gemäß zumindest einer Ausführungsform wird die Strukturhöhe durch Temperaturbehandlung des Substrates, der Schicht oder des Schichtsystems nach der Ionenimplantation erreicht. Ursächlich dafür ist die Ausheilung und Umbildung eines Teils der während der Ionenimplantation erzeugten Defekte. Die Strukturhöhe kann durch Höhe der Temperatur und Dauer der Temperaturbehandlung gezielt eingestellt werden. Die Temperatur kann beispielsweise zwischen 100°C und 900°C betragen. Die Dauer der Temperaturbehandlung kann einige Sekunden bis einige Stunden betragen. Die Temperaturbehandlung kann in einem Ofen unter Gasatmosphäre erfolgen. Die Atmosphäre kann beispielsweise Luft, Vakuum oder Gase wie Sauerstoff oder Argon enthalten.

Es wird weiterhin ein diffraktives optisches Element angegeben. Gemäß zumindest einer Ausführungsform weist das diffraktive optische Element eine Oberflächenstruktur auf, die in einem Substrat oder einer Schicht des diffraktiven optischen Elements ausgebildet ist, wobei die Oberflächenstruktur eine Strukturhöhe von weniger als 10 nm aufweist, und wobei das Substrat oder die Schicht unterhalb der Oberflächenstruktur einen Ionenimplantationsbereich aufweist.

Gemäß zumindest einer Ausführungsform ist das diffraktive optische Element ein Reflexionsbeugungsgitter. Das diffraktive optische Element kann insbesondere eine Oberflächenstruktur aufweisen, die zur Beugung von EUV-Strahlung oder Röntgenstrahlung geeignet ist. Das diffraktive optische Element kann beispielsweise zur Beugung von EUV-oder Röntgenstrahlung, insbesondere mit Wellenlängen von etwa 0,1 nm bis 50 nm, vorgesehen sein.

Das diffraktive optische Element kann bei einer Ausführungsform ein unbeschichtetes Substrat aufweisen, in dem die Oberflächenstruktur erzeugt ist. Das Substrat kann insbesondere ein Einkristall sein. Alternativ ist möglich, dass das Substrat ein amorphes Substrat ist. Bei einer weiteren Ausgestaltung weist das diffraktive optische Element ein mit einer Schicht oder einem Schichtsystem versehenes Substrat auf, wobei die Oberflächenstruktur in der Schicht oder in der obersten Schicht des Schichtsystems erzeugt ist.

Beispielsweise ist das Schichtsystem ein Spiegelschichtsystem zur Reflexion von EUV- oder Röntgenstrahlung.

Die zuvor im Zusammenhang mit dem Verfahren beschriebenen vorteilhaften Ausgestaltungen gelten auch für das diffraktive optische Element und umgekehrt.

Das Verfahren und das diffraktive optische Element werden im Folgenden anhand von Beispielen im Zusammenhang mit den Figuren 1 bis 4 näher erläutert.

Es zeigen:
- Figur 1: eine schematische Darstellung eines Verfahrensschritts bei dem Verfahren zur Herstellung des diffraktiven optischen Elements,
- Figur 2: eine schematische Darstellung eines Querschnitts durch ein Beispiel des diffraktiven optischen Elements,
- Figur 3: eine Rasterkraftmikroskopie-Aufnahme eines Ausschnitts der Oberflächenstruktur bei einem Beispiel eines diffraktiven optischen Elements, und
- Figur 4: eine Darstellung eines Höhenprofils des Beispiels der Figur 3.

Gleiche oder gleich wirkende Bestandteile sind in den Figuren jeweils mit den gleichen Bezugszeichen versehen. Die dargestellten Bestandteile sowie die Größenverhältnisse der Bestandteile untereinander sind nicht als maßstabsgerecht anzusehen.

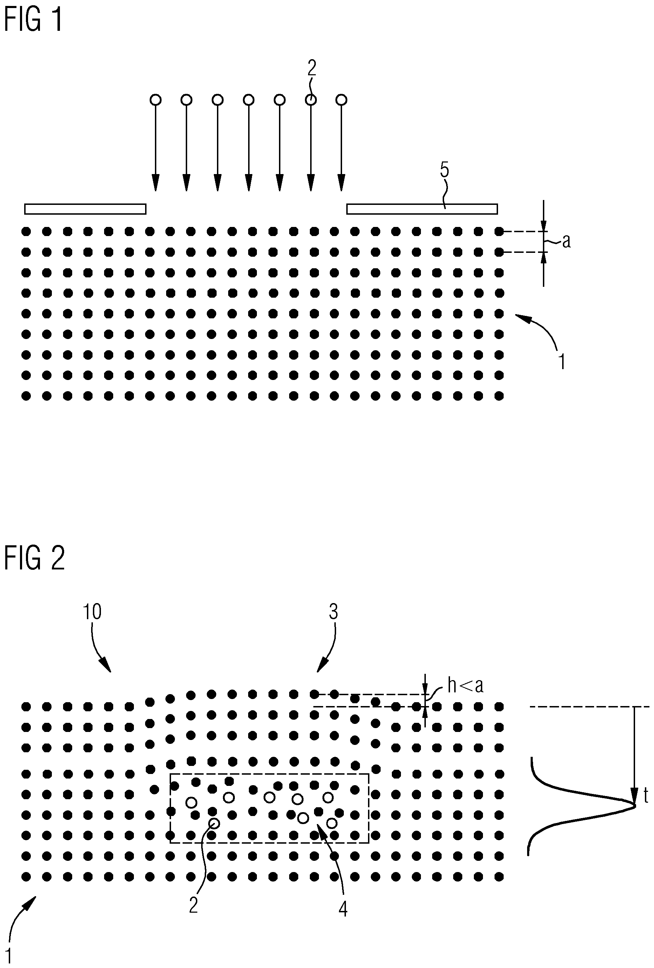

Bei dem in Figur 1 dargestellten Verfahrensschritt zur Herstellung eines diffraktiven optischen Elements werden Ionen 2 in die Oberfläche eines Substrats 1 implantiert. Das Substrat 1 ist vorzugsweise ein Einkristall. Beispielsweise ist das Substrat 1 ein Siliziumsubstrat. Das Substrat weist bei dem Beispiel Gitterebenen mit einem Gitterebenenabstand a in vertikaler Richtung auf. Das Verfahren kann alternativ aber auch für amorphe Substrate angewendet werden.

Bei dem hier dargestellten Beispiel werden die Ionen 2 direkt in das Substrat 1 implantiert. Alternativ wäre es aber auch möglich, dass vor der Ionenimplantation eine Schicht oder ein Schichtsystem auf das Substrat 1 aufgebracht wird. In diesem Fall werden die Ionen 2 in die Schicht, das Schichtsystem oder in das darunterliegende Substrat implantiert. Beispielsweise kann auf das Substrat 1 eine Schicht oder ein Schichtsystem zur Reflexion von EUV- oder Röntgenstrahlen aufgebracht werden.

Die Ionen 2 werden bei dem Verfahren vorteilhaft ortsabhängig in das Substrat 1 implantiert. Insbesondere wird ein in lateraler Richtung, d.h. parallel zur Oberfläche des Substrats 1, variierendes Implantationsprofil erzeugt. Hierzu wird vor der Ionenimplantation vorteilhaft eine Maskenschicht 5 aufgebracht. Die Maskenschicht 5 kann eine Metallschicht sein, die bei der Ionenimplantation von den Ionen nicht durchdrungen wird. Beispielsweise ist die Maskenschicht 5 eine Chromschicht oder eine Goldschicht. Die Maskenschicht kann aber auch andere Materialien wie beispielsweise Metalloxide, Polymere oder Resists aufweisen. Alternativ zur Verwendung einer Maskenschicht 5 ist es möglich, dass ein lateral begrenzter Ionenstrahl ortsabhängig mit variierender Ionenfluenz über die Substratoberfläche geführt wird. In Figur 1 ist zur vereinfachten Darstellung des Prinzips nur eine Öffnung in der Maskenschicht 5 dargestellt, mit der eine Erhebung der zu erzeugenden Oberflächenstruktur hergestellt wird. Tatsächlich kann die Maskenschicht 5 eine Vielzahl derartiger Öffnungen aufweisen, die insbesondere eine periodische Gitterstruktur ausbilden können. Die Gitterstruktur kann beispielsweise eine Gitterkonstante im Bereich von 50 nm bis 500 nm aufweisen.

Die Figur 2 zeigt das Substrat 1 nach der Implantation der Ionen **2.** Die in das Substrat 1 implantierten Ionen 2 bewirken die Ausbildung einer Oberflächenstruktur **3.** Insbesondere wird die Oberfläche über einem Ionenimplantationsbereich 4 angehoben. Die Anhebung erfolgt durch Volumenänderung aufgrund der Erzeugung von Defekten im Kristallgitter des Substrats 1 und den sich daraus ergebenden Veränderungen der Bindungslängen und/oder der Dichte. Die erzielbare Strukturhöhe der Oberflächenstruktur 3 ist somit von der räumlichen Ausdehnung sowie der Tiefenlage des Ionenimplantationsbereichs 4 abhängig und durch die Art der Kristalldefekte (z.B. Punktdefekte wie Leerstellen, Zwischengitter- und Substitutionsatome, Versetzungen, Stapelfehler, amorphisierte Bereiche) bedingt.

In der Figur 2 ist neben dem Substrat 1 schematisch ein Tiefenprofil der implantierten Ionen 2 dargestellt. Die Konzentration der implantierten Ionen 2 in Abhängigkeit von der Tiefe kann durch die Wahl der Implantationsparameter (Ionenart, Ionenenergie, Ionenfluenz, Bestrahlungstemperatur) oder durch eine nachfolgende Temperaturbehandlung genau und gezielt eingestellt werden. Die Ionenimplantationstiefe beträgt vorzugsweise zwischen 10 nm und 500 nm. Unter der Ionenimplantationstiefe ist hier die Tiefe t zu verstehen, in der die Ionenkonzentration ihr Maximum aufweist. Die Ionenimplantationstiefe ist insbesondere von der Ionenenergie der verwendeten Ionen abhängig. Diese beträgt vorzugsweise zwischen 2 keV und 100 keV. Die implantierten Ionen können beispielsweise Edelgasionen wie Argonionen oder Heliumionen, welche die weiteren physikalischen Eigenschaften des Materials nicht beeinflussen, oder Substitutionsatome des Materials des Substrates, der Schicht oder des Schichtsystems sein.

Durch eine ortsabhängige Implantation der Ionen 2 kann eine Anhebung der Oberfläche mit hoher lokaler Auflösung strukturiert und damit die Oberflächenstruktur 3 erzeugt werden. Bei Verwendung eines einkristallinen Substrats 1 kann bei dem Verfahren vorteilhaft die Kristallstruktur an der Oberfläche des Substrats 1 erhalten werden. Durch Kontrolle der Implantationsparameter, der Parameter einer nachfolgenden Temperaturbehandlung und unter Ausnutzung der Glättungseigenschaften einer über dem Ionenimplantationsbereich 4 liegenden kristallinen Schicht lässt sich die Verspannung der Netzebenen in Richtung zur Oberfläche steuern.

Bei dem Verfahren kann vorteilhaft eine Strukturhöhe h realisiert werden, die einem nicht ganzzahligen Vielfachen des Gitterebenenabstands a des Materials des Substrats 1 entsprechen. Die Strukturhöhe h beträgt vorzugsweise zwischen 0,1 nm und 10 nm. Die Strukturhöhe kann insbesondere weniger als 5 nm oder sogar weniger als 1 nm betragen. Ein Vorteil des hierin beschriebenen Verfahrens besteht insbesondere darin, dass derart geringe Strukturhöhen der Oberflächenstruktur 3 mit hoher Genauigkeit und Ortsauflösung hergestellt werden können. Mit einem Ätzverfahren wäre dies nicht ohne weiteres möglich. Insbesondere kann die erzeugte Strukturhöhe h kleiner als der Gitterebenenabstand a des Substrats 1 sein. Im Gegensatz dazu können mit einem Ätzverfahren nur Strukturhöhen erzielt werden, die nicht kleiner sind als der Gitterebenenabstand a.

Das Substrat 1 mit der mit dem Verfahren hergestellten Oberflächenstruktur 3 bildet insbesondere ein diffraktives optisches Element 10 aus.

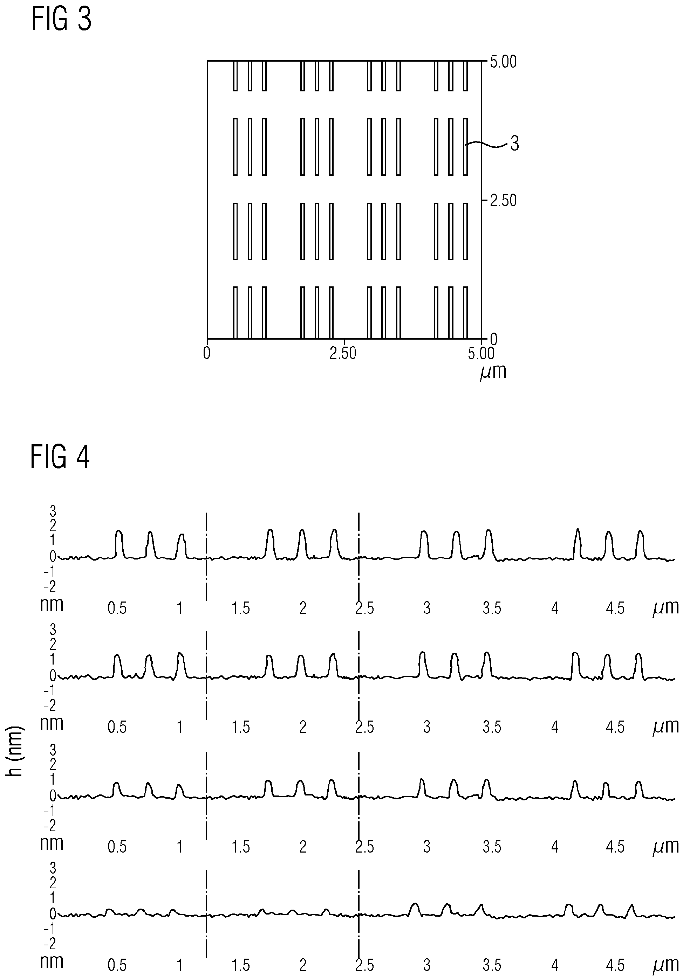

In Figur 3 ist eine Rasterkraftmikroskopie-Aufnahme gezeigt, die einen Ausschnitt einer Oberflächenstruktur 3 zeigt, die Bestandteil eines diffraktiven optischen Elements 10 sein kann. Der Bildausschnitt zeigt eine Fläche von 5 µm x 5 µm. Die Oberflächenstruktur 3 weist vier Zeilen mit Streifenstrukturen auf, deren Strukturhöhe in der Figur 3 von unten nach oben zunimmt.

Ein Höhenprofil der Oberflächenstrukturen 3 ist in Figur 4 dargestellt. In Figur 4 ist zu sehen, dass die Oberflächenstrukturen 3 Strukturhöhen h von weniger als 2 nm (oberste Zeile) bis hin zu weniger als 1 nm (unterste Zeile) aufweisen.

## Patentansprüche

1. Verfahren zur Herstellung eines diffraktiven optischen Elements (10),
bei dem eine Oberflächenstruktur (3) des diffraktiven optischen Elements (10) durch Implantation von Ionen (2) in das Material eines Substrats (1), einer Schicht oder eines Schichtsystems erzeugt wird, wobei die Oberflächenstruktur (3) mit einer in lateraler Richtung variierenden Strukturhöhe erzeugt wird und die Strukturhöhe weniger als 10 nm beträgt.

2. Verfahren nach Anspruch 1,
wobei in einem Implantationsbereich eine Volumenänderung entsteht, die zu einer Anhebung einer Oberfläche und somit zur Entstehung der Oberflächenstruktur (3) führt.

3. Verfahren nach einem der vorhergehenden Ansprüche,
wobei die Ionenimplantation durch eine strukturierte Maskenschicht (5) erfolgt.

4. Verfahren nach einem der vorhergehenden Ansprüche,
wobei die Ionenimplantation mittels eines lateral begrenzten Ionenstrahls erfolgt, und wobei die Ionenfluenz des Ionenstrahls bei der Ionenimplantation variiert wird.

5. Verfahren nach einem der vorhergehenden Ansprüche,
wobei die Ionen (2) in eine Implantationstiefe zwischen 10 nm und 500 nm implantiert werden.

6. Verfahren nach einem der vorhergehenden Ansprüche, wobei die Ionenenergie bei der Ionenimplantation zwischen 2 keV und 100 keV beträgt.

7. Verfahren nach einem der vorhergehenden Ansprüche,
wobei die Strukturhöhe der Oberflächenstruktur (3) ein nicht ganzzahliges Vielfaches des Gitterebenenabstands des Materials oder ein nicht ganzzahliges Vielfaches der Dicke einer einzelnen Schicht des Schichtsystems des diffraktiven optischen Elements (10) ist.

8. Verfahren nach einem der vorhergehenden Ansprüche,
wobei die Strukturhöhe der Oberflächenstruktur (3) kleiner ist als der Gitterebenenabstand des Materials an der Oberfläche oder kleiner ist als die Dicke einer einzelnen Schicht des Schichtsystems des diffraktiven optischen Elements.

9. Diffraktives optisches Element,
das eine Oberflächenstruktur (3) in dem Material eines Substrats (1), einer Schicht oder eines Schichtsystems aufweist, wobei die Oberflächenstruktur (3) eine in lateraler Richtung variierende Strukturhöhe von weniger als 10 nm aufweist, und wobei das Substrat (1), die Schicht oder das Schichtsystem unterhalb der Oberflächenstruktur (3) einen Ionenimplantationsbereich (4) aufweist.

10. Diffraktives optisches Element nach Anspruch 9, wobei das diffraktive optische Element (10) ein Reflexionsbeugungsgitter ist.

11. Diffraktives optisches Element nach einem der Ansprüche 9 oder 10,
wobei die Ionenimplantationstiefe zwischen 10 nm und 500 nm beträgt.

12. Diffraktives optisches Element nach einem der Ansprüche 9 bis 11,
wobei die Strukturhöhe der Oberflächenstruktur (3) ein nicht ganzzahliges Vielfaches des Gitterebenenabstands des Materials an der Oberfläche oder ein nicht ganzzahliges Vielfaches der Dicke einer einzelnen Schicht des Schichtsystems des diffraktiven optischen Elements (10) ist.

13. Diffraktives optisches Element nach einem der Ansprüche 9 bis 12,
wobei die Strukturhöhe h der Oberflächenstruktur (3) geringer ist als ein Gitterebenenabstand des Substrats (1) oder geringer ist als die Dicke einer einzelnen Schicht des Schichtsystems.

14. Diffraktives optisches Element nach einem der Ansprüche 9 bis 13,
wobei das Substrat (1) ein Einkristall oder ein amorphes Substrat ist.

15. Diffraktives optisches Element nach einem der Ansprüche 9 bis 14,
wobei die Schicht oder das Schichtsystem ein Spiegel für EUV-Strahlung oder Röntgenstrahlung ist.

## Claims

1. A method for producing a diffractive optical element (10), wherein a surface structure (3) of the diffractive optical element (10) is generated by implanting ions (2) into the material of a substrate (1), a layer or a layer system, wherein the surface structure (3) is generated with a structure height varying in lateral direction and comprises a structure height of less than 10 nm.

2. The method according to claim 1,
Wherein a volume change occurs in an implantation region, the volume change resulting in an elevation of a surface and thus in a formation of the surface structure (3).

3. The method according to one of the preceding claims,
wherein the ion implantation is performed through a patterned mask layer (5).

4. The method according to one of the preceding claims,
wherein the ion implantation is performed by means of a laterally confined ion beam, and wherein the ion fluence of the ion beam is varied during the ion implantation.

5. The method according to one of the preceding claims,
wherein the ions (2) are implanted to an implantation depth between 10 nm and 500 nm.

6. The method according to one of the preceding claims,
wherein the ion energy during ion implantation is between 2 keV and 100 keV.

7. The method according to one of the preceding claims,
wherein the structure height of the surface structure (3) is a non-integer multiple of the lattice plane spacing of the material or a non-integer multiple of the thickness of a single layer of the layer system of the diffractive optical element (10).

8. The method according to one of the preceding claims,
wherein the structure height of the surface structure (3) is smaller than the grating plane spacing of the material at the surface or is smaller than the thickness of a single layer of the layer system of the diffractive optical element.

9. A diffractive optical element,
comprising a surface structure (3) in the material of a substrate (1), layer or layer system, wherein the surface structure (3) comprises a laterally varying structure height of less than 10 nm, and wherein the substrate (1), layer or layer system comprises an ion implantation region (4) below the surface structure (3).

10. The diffractive optical element according to claim 9,
wherein the diffractive optical element (10) is a reflection diffraction grating.

11. The diffractive optical element according to one of claims 9 or 10,
wherein the ion implantation depth is between 10 nm and 500 nm.

12. The diffractive optical element according to any one of claims 9 to 11,
wherein the structure height of the surface structure (3) is a non-integer multiple of the lattice plane spacing of the material at the surface or a non-integer multiple of the thickness of a single layer of the layer system of the diffractive optical element (10).

13. The diffractive optical element according to any one of claims 9 to 12,
wherein the structure height h of the surface structure (3) is less than a grating plane spacing of the substrate (1) or is less than the thickness of a single layer of the layer system.

14. The diffractive optical element according to any one of claims 9 to 13,
wherein the substrate (1) is a single crystal or an amorphous substrate.

15. The diffractive optical element according to any one of claims 9 to 14,
wherein the layer or layer system is a mirror for EUV radiation or X-rays.

## Revendications

1. Procédé de fabrication d'un élément optique diffractif (10),
dans lequel une structure de surface (3) de l'élément optique diffractif (10) est produite par implantation d'ions (2) dans le matériau d'un substrat (1), d'une couche ou d'un système de couches, la structure de surface (3) étant produite avec une hauteur de structure variant dans la direction latérale et la hauteur de structure étant inférieure à 10 nm.

2. Procédé selon la revendication 1,
dans lequel il se produit dans une zone d'implantation une modification de volume qui conduit à une élévation d'une surface et donc à la création de la structure de surface (3).

3. Procédé selon l'une des revendications précédentes,
l'implantation ionique étant réalisée à travers une couche de masque structurée (5).

4. Procédé selon l'une des revendications précédentes,
dans lequel l'implantation ionique est réalisée au moyen d'un faisceau d'ions limité latéralement, et dans lequel la fluence ionique du faisceau d'ions est modifiée lors de l'implantation ionique.

5. Procédé selon l'une des revendications précédentes,
dans lequel les ions (2) sont implantés à une profondeur d'implantation comprise entre 10 nm et 500 nm.

6. Procédé selon l'une quelconque des revendications précédentes,
dans lequel l'énergie des ions lors de l'implantation des ions est comprise entre 2 keV et 100 keV.

7. Procédé selon l'une des revendications précédentes,
dans lequel la hauteur de la structure de surface (3) est un multiple non entier de la distance entre les plans du réseau du matériau ou un multiple non entier de l'épaisseur d'une seule couche du système de couches de l'élément optique diffractif (10).

8. Procédé selon l'une des revendications précédentes,
dans lequel la hauteur de la structure de surface (3) est inférieure à la distance entre les plans de réseau du matériau à la surface ou est inférieure à l'épaisseur d'une seule couche du système de couches de l'élément optique diffractif.

9. Élément optique diffractif,
qui présente une structure de surface (3) dans le matériau d'un substrat (1), d'une couche ou d'un système de couches, la structure de surface (3) présentant une hauteur de structure variant dans la direction latérale de moins de 10 nm, et le substrat (1), la couche ou le système de couches présentant une zone d'implantation ionique (4) sous la structure de surface (3).

10. Élément optique diffractif selon la revendication 9,
dans lequel l'élément optique diffractif (10) est un réseau de diffraction par réflexion.

11. Élément optique diffractif selon l'une quelconque des revendications 9 ou 10,
dans lequel la profondeur d'implantation ionique est comprise entre 10 nm et 500 nm.

12. Élément optique diffractif selon l'une quelconque des revendications 9 à 11,
dans lequel la hauteur de la structure de surface (3) est un multiple non entier de la distance entre les plans de réseau du matériau à la surface ou un multiple non entier de l'épaisseur d'une seule couche du système de couches de l'élément optique diffractif (10).

13. Élément optique diffractif selon l'une quelconque des revendications 9 à 12,
dans lequel la hauteur h de la structure de surface (3) est inférieure à un espacement de plan de réseau du substrat (1) ou est inférieure à l'épaisseur d'une couche individuelle du système de couches.

14. Élément optique diffractif selon l'une quelconque des revendications 9 à 13,
dans lequel le substrat (1) est un monocristal ou un substrat amorphe.

15. Élément optique diffractif selon l'une quelconque des revendications 9 à 14,
dans lequel la couche ou le système de couches est un miroir pour le rayonnement EUV ou les rayons X.
